Europäisches Patentamt

(19) European Patent Office

Office européen des brevets

(11) Publication number:

# 0 004 775

A2

(12) **EUROPEAN PATENT APPLICATION**

(21) Application number: 79300553.9

(22) Date of filing: 03.04.79

(51) Int. Cl.²: **G 06 F 15/16**
**G 06 F 15/06**

(30) Priority: 06.04.78 GB 1348278

(43) Date of publication of application:
17.10.79 Bulletin 79/21

(84) Designated Contracting States:
BE DE FR GB IT SE

(71) Applicant: Croxon, Allen Henry
South Lodge Hale House Lane
Churt Surrey(GB)

(72) Inventor: Croxon, Allen Henry
South Lodge Hale House Lane
Churt Surrey(GB)

(74) Representative: Messulam, Alex Moses et al,
MARKS & CLERK 57/60 Lincoln's Inn Fields
London WC2A 3LS(GB)

(54) Microprocessor including a plurality of communication processors.

(57) The invention relates to a microprocessor designed specifically for use in a homogeneous computing system. The microprocessor has a memory (20), a main processing unit (30) for performing arithmetic and logic operations, and a plurality of communication processors ($P_0$ to $P_{11}$) controlling the communication between the different microprocessors in a system. The communication processors ($P_0$ to $P_{11}$) are controlled by programmes so that a set of communication processors ($P_4$ to $P_{11}$) can selectively be controlled to provide either a plurality of serial inputs/outputs or the communication processors ($P_4$ to $P_{11}$) of the set collectively to provide a parallel interface.

EP 0 004 775 A2

Fig.1.

## Improvements in Microprocessors

The present invention relates to microprocessors.

A major problem in the construction of electronic equipment in general and particularly in the construction of computing and processing equipment is the problem of information storage in various modules of the system. The requirements for the memory capabilities of modules is studied and then, in the known art, a memory having a preset manner and function of connection is designed; this preset manner and function of connection cannot be varied after implementation. The fact that the manner and function of connections between modules cannot be varied in the course of the system leads to limitations on the manner and speed of operation of the system as a whole.

In known processors, when several tasks are fed into the machine a certain predetermined degree of priority is allocated to each task and then, in accordance with the degree of priority allocated, a specific portion of a set cyclic period of time is allocated in which the central processing unit of the machine deals with that particular task. Due to the high operating speeds of modern machines, the central processing unit appears to be dealing with all of the set tasks simultaneously. However, it is obvious that such a unit has a limit to the number of tasks which it can deal with at any one time and because of this fact several disadvantages occur with present day machines. Situations occur when too many tasks are assigned to the central processing unit and the machine becomes overloaded. When there is a heavy demand upon the central processing unit the transfer of data from one part of the machine to another, the "throughput" is considerably slowed down, due to the fact that this transfer can only take place when a portion of the cyclic period of the central processing unit is free from other tasks.

The concept involved in present day machines is that one machine performs a number of different tasks each in turn, or part of each in turn. It is because of the nature of this concept that modern day machines suffer the disadvantages of overload and of poor enhancability. In order to enhance a present day machine it is necessary to increase the operating speed of the machine.

There have been proposed machines which operate using a different concept. In such machines various portions of the machine deal simultaneously with tasks which may be entirely independent of each other. An example of a machine which operates on this concept is a homogeneous processor; machines of this type are less susceptible to the above mentioned disadvantages.

A homogeneous computing system possesses an even distribution of processor and memory and ideally data can be transferred from one module of the system to another via other modules without affecting the operation of these other modules.

0004775

The present invention seeks to provide a microprocessor which is particularly suitable for use in a homogeneous computing system.

In accordance with the present invention, there is provided a microprocessor comprising a memory unit connected to a main processing unit capable of performing logic and arithmetic operations on information stored in the memory and to a plurality of communication processors each connected between the memory and a respective output terminal of the microprocessor which terminal is connectable to another microprocessor to allow mutual information access between the microprocessors so as to allow the construction of a homogeneous computing system and in which a set of communication processors are programmable by information stored in the memory in such a manner that each respective output terminal of the processors in the set carries serial information between microprocessors or the output terminals connected to the different communication processors of the set act collectively as a parallel interface.

If the system is to be built up of similar units, then the units must be capable of two modes of interface since some of the peripherals, such as printers, will have parallel input while others will have serial input. The present invention is concerned with a microprocessor which provides this adaptability. Aside from the question of controlling peripherals, the adaptability of the interface allows different configurations of computing system since, for example, where a matrix circuit is involved one microprocessor may have to communicate with a plurality of others, thereby necessitating serial input, whereas in another configuration, such as a ring structure, when multiplicity of output is not required but speed of access is important, then the parallel interface would be used.

Conveniently, the memory is pre-programmed to determine the type of interface provided by the communication processors whereby the hardware may be common to all the microprocessors in a homogeneous computing system but the programming of each individual microprocessor will determine its interface mode depending on its position within the computing system.

As it is unlikely that the programme will need to be changed once the computing system configuration has been determined, it is convenient to form the part of the memory storing the interface controlling programme as a so-called EPROM, that is to say an erasable programmable read only memory.

In a microprocessor with an adaptable interface, it is important that the memory should be capable of being addressed simultaneously by several communication processors acting in parallel without any interference between the data of the different processors. In order to achieve this, in accordance with a preferred embodiment of the invention, the memory is comprised of a plurality of memory segments each connected to all of the communication processors and the main processing unit and including a memory array subdivided into a plurality of mutually independent bits whereby the individual bits of the memory array may be addressed sequentially by a single communication processor or simultaneously by a plurality of communication processors acting in parallel.

Within a microprocessor intended to operate as part of a homogeneous system, it is possible for different communication processors to request access to the memory simultaneously. As a given bit of the memory cannot be addressed simultaneously by two different communication processors, the preferred embodiment of the invention provides between the communication processors and the memory an arbitrator for determining the order in which communication processors carrying a simultaneous request for access to the memory are served.

Advantageously, the arbitrator is operative to assign a predetermined priority number to each communication processor so that processors queuing for an equal amount of time are served in the predetermined priority order and is operative to modify the priority of a given communication processor in accordance with the number of cycles that a request for access to the memory has not been granted by the arbitrator.

Conveniently, the arbitrator may comprise a counter for each communication processor into the least significant bits of which is loaded a number corresponding to the priority of the communication processor, a bit of greater significance being incremented for each cycle during which a request by the communication processor has not been granted, the arbitrator being operative to grant the request of the communication processor having the highest count in the respective counter.

The invention will now be described further, by way of example, with reference to the accompanying drawings, in which:

Figure 1 is a block schematic diagram of a microprocessor:

Figure 2 is a general schematic diagram of the memory in Figure 1;

Figure 3 is a block diagram of each of the memory segments shown in Figure 2;

Figure 4 shows a block diagram of the arbitrator in Figure 3;

Figure 5 shows the construction of the blocks labelled A in Figure 4;

Figure 6 shows the construction of the blocks labelled B in Figure 4; and

Figure 7 is a block diagram to illustrate the synchronisation of the communication processors.

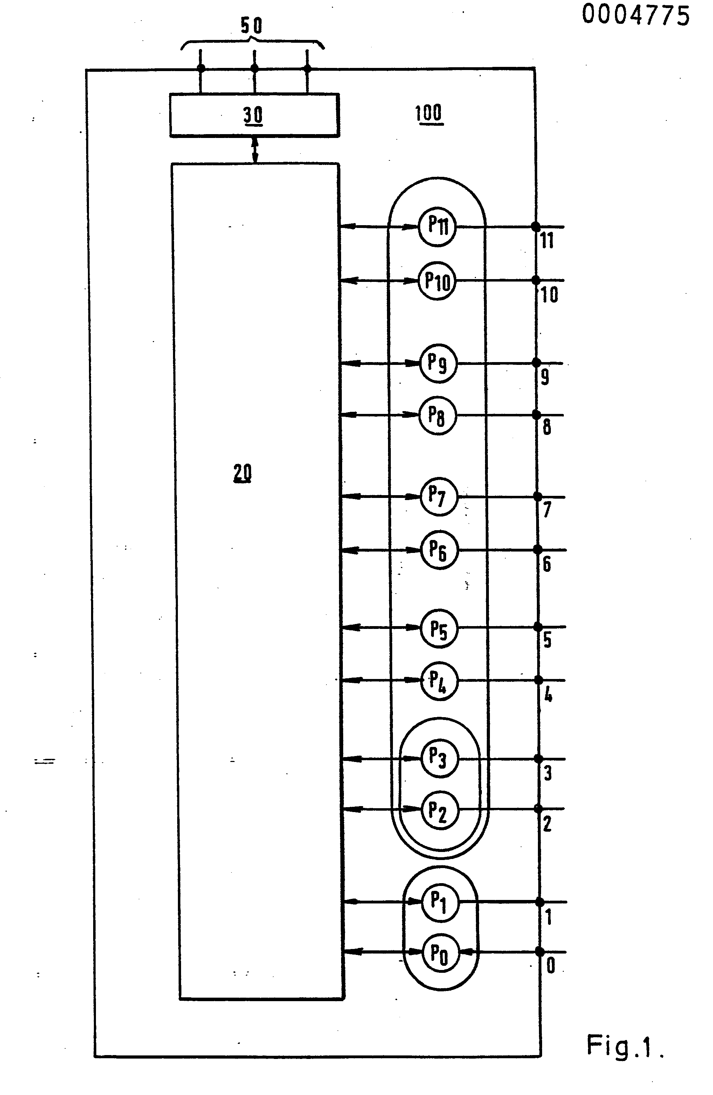

A microprocessor in accordance with the invention generally designated 100 in Figure 1 has a memory 20 addressed by a main processing unit 30 and a plurality of communication processors designated $P_0$ to $P_{11}$. Each of the communication processors is connected to a respective output line designated from 0 to 11 while the main processing unit 30 has separate connections which are together designated 50 in Figure 1.

The microprocessor illustrated is intended to be connected to similar microprocessors to form a computing system.

A so-called homogeneous computing system has many advantages from the point of view of versatility, reliability and adaptability. Several configurations can be used, for example a ring structure or a matrix structure may be adopted. The communication processors allow both the processing and the memory to be divided between the individual microprocessors and act not only to pass on information from one microprocessor to another, but also to route a request for information through them to the appropriate memory in the system in which the information is contained.

Although in some positions within a given system configuration each of the output lines will function to provide a serial output, it is sometimes desired, for example when a given microprocessor in the system is connected to a peripheral unit such as a printer that several outputs be used to form a parallel output. The microprocessor herein described is intended to provide an adaptable interface and this will be further described by reference to Figure 1 which shows how the communication processors can be grouped to provide a parallel interface. In

Figure 1, the communications processors $P_1$ and $P_0$ function in the normal manner as serial inputs/outputs. Communication processors $P_4$ to $P_{11}$ act as an eight bit parallel output. The processors $P_2$ and $P_3$ act as synchronisation control for the eight bit parallel output to provide a so-called handshake to control the timing of the processors $P_4$ to $P_{11}$ when acting in parallel output mode. When acting in serial output mode all the communication processors act individually.

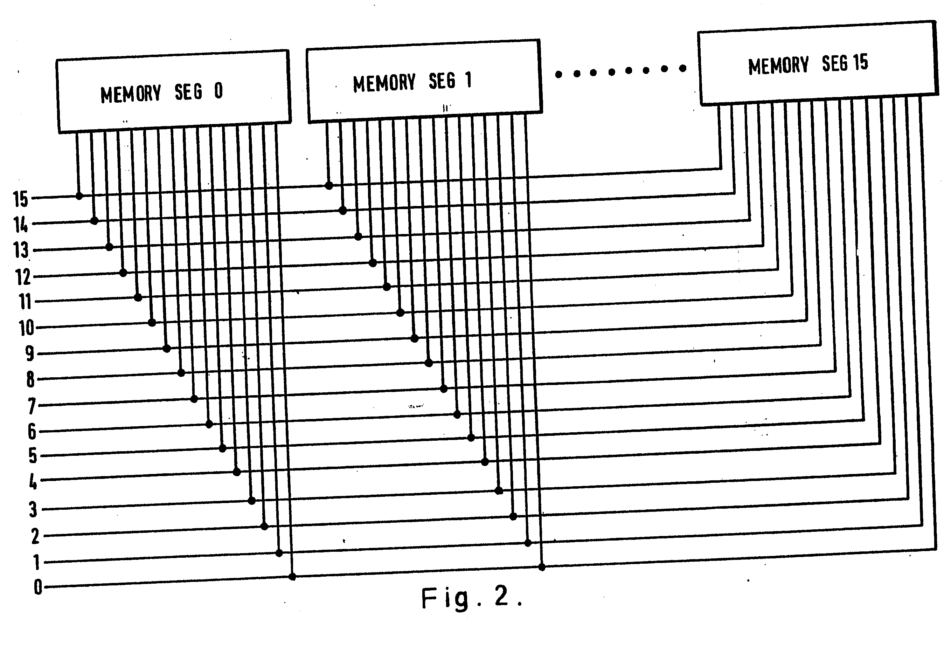

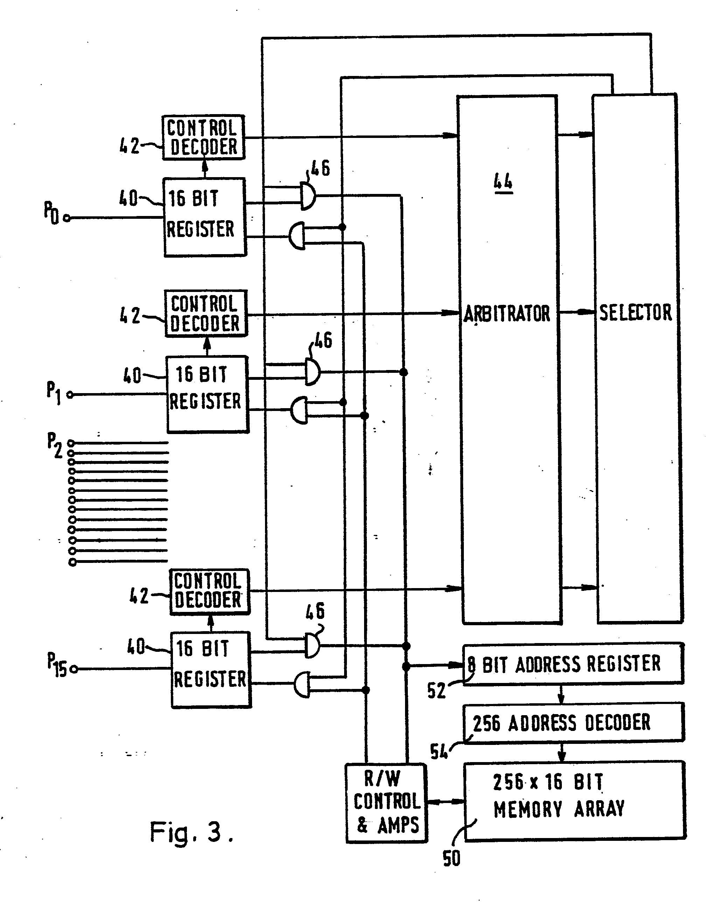

It will be appreciated that the memory 20 must now be so constructed as to be capable of being addressed either individually in the event of all the commmunication processors operating in serial mode or simultaneously by a plurality of communication processors if these are acting in parallel mode. The manner in which this is achieved will now be described by reference to Figures 2 and 3.

In Figure 2, it will be seen that the memory is divided into sixteen memory segments designated 0 to 15 respectively. Each memory segment has sixteen input/output terminals, twelve of which are each connected to a respective communication processor, a thirteenth is connected to the main processor while the remaining three are redundant. This redundancy is provided intentionally so that the memory segments can remain useful in the event of a fault developing on some of the lines. Each of the input/output lines is a sixteen bit line used for information access between the various processors and the memory segment.

A detailed view of each memory segment is shown in Figure 3. Each of the sixteen bit lines connected to the processors and designated $P_0$ to $P_{15}$ is connected to a respective sixteen bit register 40. Information requests from the memory have the form of a sixteen bit word which is made up as follows. The first eight bits (0 to 7) indicate the local address within the memory segment of the information required by the processor. The ninth to twelfth bits (8 to 11) indicate the address of the segment, the fifteenth bit (14) indicates the nature of the access required, that is to say reading or writing, and the last bit (15) is generated within the memory segment itself to indicate to the processor whether or not its request for access has been granted. The thirteenth bit (12) indicates whether it is a single or a multiple processor access, that is to say whether the information is to be read serially or in parallel and the fourteenth bit (13) is intended to indicate in the event of a parallel access which of the various processors carries the address information and acts as synchronisation controller.
A control decoder 42 is connected to each of the
sixteen bit registers 40 to identify when that segment
of the memory is being requested by the various
processors.  If only a single request is present for
access to the memory segment, then that access can be
allowed immediately but further circuitry is provided
to decide the order of priority in the event of a
plurality of simultaneous requests.  The arbitrator
44, which will be described in more detail hereinafter,
decides which of the processors requesting access should
first be served and applies a signal to a selector
which then opens appropriate gates 46 between the
sixteen bit register 40 and the memory array 50.

The memory array is itself divided into sixteen
bits, each with 256 locations and it is possible for
the bits to be separately addressed simultaneously
when the processors are operating in parallel.  The
memory array has an eight bit address register 52 into
which the first eight bits stored in the sixteen bit
register are recorded and a 256 bit address decoder 54
connected between the address register and the memory
array.  The read word, or written word, is communicated
through the gates 46 to the appropriate location in
the memory.

In the event of a single access, the information is read from, or written into the memory array 50 by the register 40 of only one processor $P_0$ to $P_{15}$, but in the event of multiple access the information is transferred to the registers of all the parallel acting processors under the control of the address in the synchronisation processor. Even though each register will only require a respective one of the sixteen bits of the word being read in parallel, all sixteen bits are transferred to the register and it is left to the processor to select the desired bit. It will be appreciated that the lines shown as single lines for convenience in Figure 3 in fact are multiple lines and the gates 46 are also multiple gates.

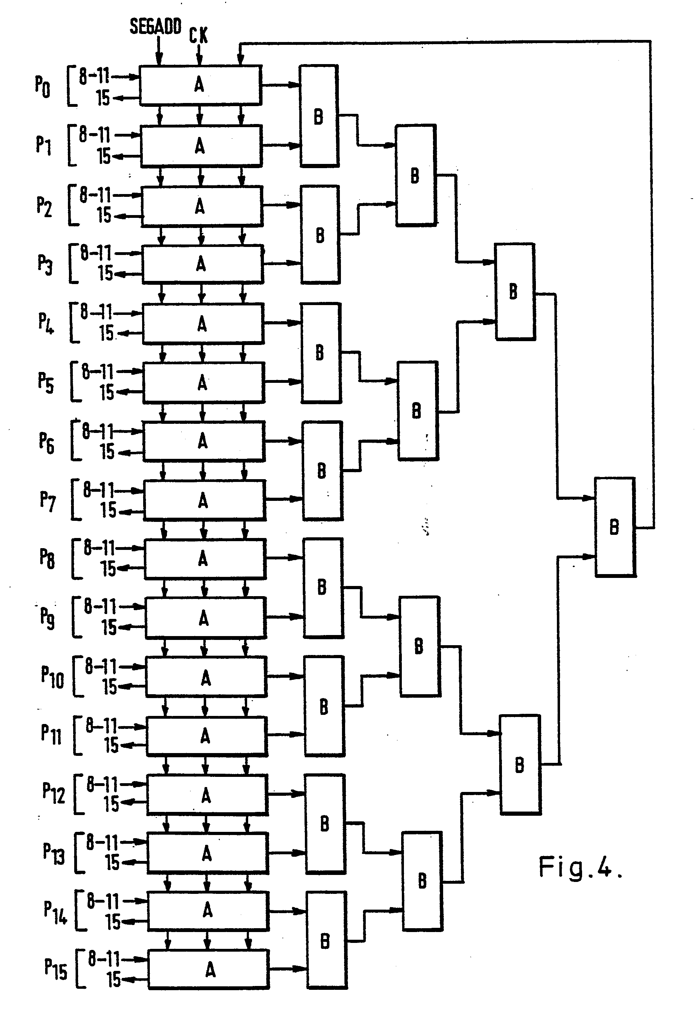

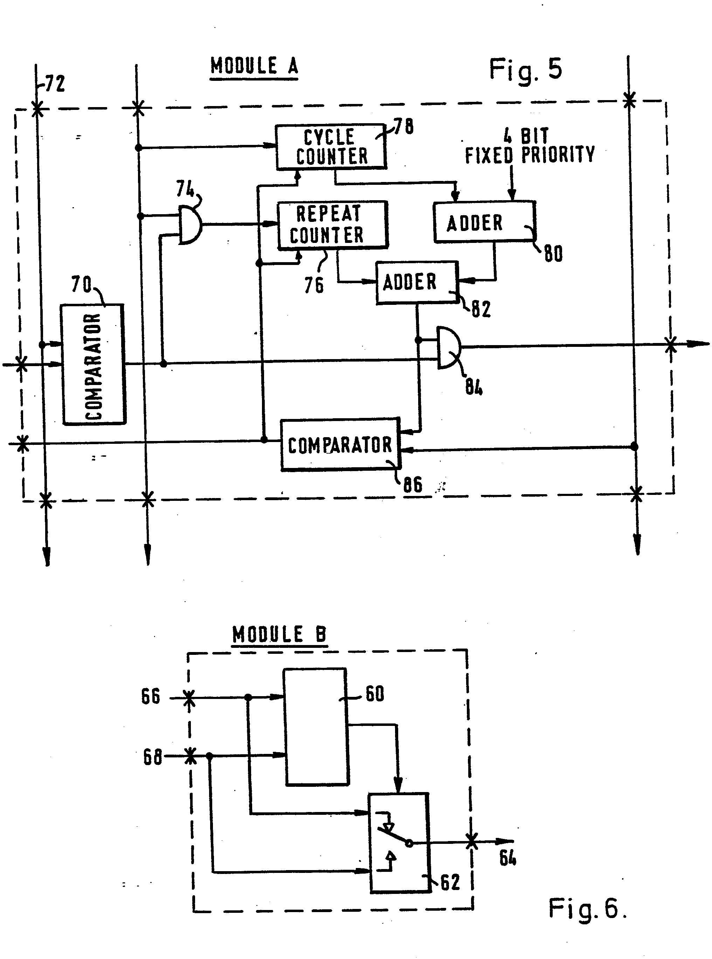

The arbitrator 44 shown in Figure 4 employs two forms of blocks designated A and B respectively, the blocks labelled A being shown in more detail in Figure 5, while the blocks labelled B are shown in Figure 6. Each block B consists of a comparator 60 which controls a gate 62 to gate out of the output 64 the greater of the two input signals on its input lines 66 and 68. In Figure 5, each module A is seen to comprise a first comparator 70 which is connected to bits 8 to 11 from the control decoder to record the segment address. The comparator is also connected to a segment address line 72 so that an output of the comparator 70 indicates that a request for that memory segment has been made. This request is gated by the next clock signal through an AND gate 74 into a four bit request counter 76. A second counter 78 counts cycles and is directly connected to the clock signal. The output of the clock counter 78 is applied to an adder 80 which adds to the count of the counter a predetermined fixed priority which varies from one register to the next, the highest priority register, that is to say the one connected to the processor to be served first, having the highest fixed priority count. The contents of the request counter 76 and of the adder 80 are entered into a second adder 82 but it should be noted that in the latter the count in the request counter is multiplied by a power of 2 before being added to the contents of the adder 80. In other words, the two numbers in the request counter 76 and the adder 80 are placed side by side to make a new binary number within the second adder 82. The contents of the second adder 82 are gated through the output AND gate 84 to the selector circuit which consists of the blocks B as earlier described. In any given cycle, it is impossible for two output lines to have the same number and the one with the higher number will be selected for addressing the memory. This output, in addition to opening the appropriate gates 40 as earlier described, is applied to a further comparator 86 which produces an output, the effect of which is to reset the cycle and request counters 76, 78 and record in the last bit of the sixteen bit register 40 a binary signal to indicate to the requesting processor that its request has been granted.

The arrangement of the memory and the arbitrator, as above described, ensures that at no time are requests for different addresses within the memory simultaneously allowed while at the same time permitting several communication processors to address the same memory simultaneously when they are operating in parallel mode.

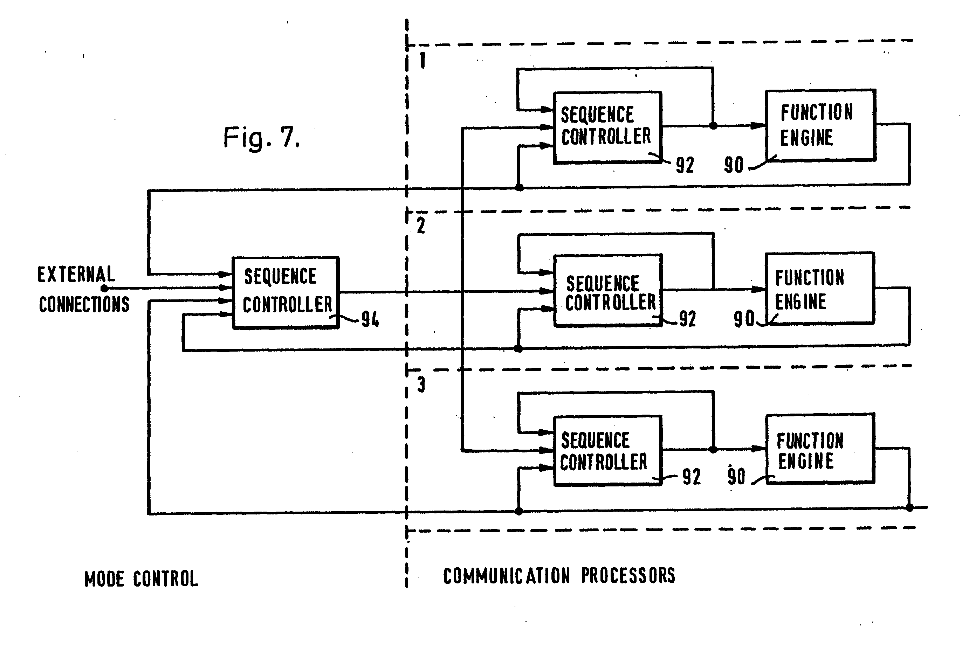

When communication processors are communicating with each other it is important that their operations be synchronised. In Figure 7, three processors are shown schematically within blocks labelled 1, 2 and 3 and each processor is regarded as consisting of a function engine 90 and a sequence controller 92. When the microprocessor is operating only with serial interface, each of the communication processors is autonomous and the timing of the operations effected by any communication processor is internally determined by its own sequence controller 92. However, in the

0004775

event of a parallel interface, it is necessary to synchronise all the communication processors operating in parallel externally and, as shown in Figure 7, this is achieved by means of a separate sequence controller 94 connected to all of the communication processors working in parallel. This sequence controller 94 forms part of the synchronisation control processors $P_2$ and $P_3$ and serves to ensure that all the individual communication processors operate synchronously when functioning in a parallel mode.

## CLAIMS

1. A microprocessor comprising a memory unit, a main processing unit for performing logic and arithmetic operations on information stored in the memory and a plurality of communication processors each connected between the memory and the respective output terminal of the microprocessor, characterized in that a set of communication processors ($P_2$ to $P_{11}$) are programmable by information stored in the memory (20) in such a manner that each respective output terminal (2 to 11) of the processors in the set ($P_2$ to $P_{11}$) carry serial information or the output terminals (4 to 11) connected to different communication processors of the set act collectively as a parallel interface.

2. A microprocessor according to Claim 1, characterized in that the memory comprises a read only memory array to determine the type of interface provided by the communication processors ($P_0$ to $P_{11}$).

3. A microprocessor as claimed in Claim 2, characterized in that the read only memory arraay serving to determine the type of interface provided by the communication processors is an erasable programmable read only memory.

4.    A microprocessor as claimed in any preceding Claim, characterised in that the memory is comprised of a plurality of memory segments each connected to all of the communication processors ($P_0$ to $P_{11}$) and to the main processing unit (30) and including a memory array (50) subdivided into a plurality of mutually independent bits such that the individual bits of memory array (50) may be addressed sequentially by a single communication processor ($P_0$, $P_1$) or simultaneously by a plurality of communication processors acting in parallel ($P_2$ to $P_{11}$).

5.    A microprocessor as claimed in Claim 4, in which an arbitrator (44) is provided between the communication processors and the main processing unit on the one hand and the memory (20) on the other hand, to determine the order in which processors carrying a simultaneous request for access to the memory are served.

6.    A microprocessor as claimed in Claim 5, characterized in that the arbitrator comprises a counter (82) for each communication processor

($P_0$ to $P_{11}$) and the main processing unit (30), a
line for loading into the least significant bits of
the counter (82) a number determining the priority
of the respective processor and means for incrementing
a bit of greater significance in the counter (82) for
each cycle during which a request by the respective
communication processor has not been granted, the
arbitrator (44) being operative to grant the request
of the communication processor having the highest
count in the respective counter (82).

Fig.1.

Fig. 2.

Fig. 3.

0004775

0004775

Fig.4.

0004775

MODULE A                    Fig. 5

MODULE B

Fig. 6.

Fig. 7.